# FASCICULE DE BREVET EUROPEEN

(11) **EP 1 212 141 B1**
(45) Date de publication et mention de la délivrance du brevet: **11.04.2007**
(21) Numéro de dépôt: 00964293.5
(22) Date de dépôt: 14.09.2000
(51) Int. Cl.: B03C 3/155, F01N 3/01, F01N 3/027, F01N 3/035, B03C 3/12, B03C 3/41, B01D 35/06

(54) **DISPOSITIF DE TRAITMENT DES GAZ D'ECHAPPEMENT D'UN MOTEUR A COMBUSTION INTERNE**
VORRICHTUNG ZUR BEHANDLUNG VON VERBRENNUNGSABGASEN EINER BRENNKRAFTMASCHINE
DEVICE FOR TREATING AN INTERNAL COMBUSTION ENGINE EXHAUST GASES

(30) Priorité: 14.09.1999 FR 9911474
(43) Date de publication de la demande: 12.06.2002
(73) Titulaire: Teboul, Daniel, 30100 Alès (FR)
(72) Inventeur: Teboul, Daniel, 30100 Alès (FR)
(74) Mandataire: Santarelli
(86) Numéro de dépôt international: PCT/FR2000/002549
(87) Numéro de publication internationale: WO 2001/019525

(56) Documents cités:
- EP-A- 0 256 325
- EP-A- 0 367 587
- WO-A-99/11909
- US-A- 5 492 677
- US-A- 5 787 704

## Description

La présente invention a trait au traitement d'un milieu gazeux chargé de particules et en particulier de composants polluants ou impuretés, solides, liquides ou gazeux, contenus dans un milieu gazeux, tel que les gaz d'échappement d'un moteur à combustion interne.

Une application particulière, mais non exclusive, est la purification des gaz d'échappement d'un moteur Diesel.

Les polluants sortant des échappements comprennent :
- des composants carbonés : CO, CO₂ ;
- des composés azotés : NO, NO₂ (généralement appelés oxydes d'azote NOₓ) ...;
- des composés organiques, tels que des hydrocarbures (HC) ...;
- des composés soufrés : SO₂, SO₃, ....;
- des particules organiques ;
- etc.

Les émissions de particules organiques sont surtout caractéristiques des moteurs Diesel et se composent d'un matériau carboné (suie), sur lequel sont adsorbées des espèces organiques diverses (SOF : Soluble Organic Fraction).

De très nombreux procédés et dispositifs de traitement des gaz d'échappement d'un moteur à combustion interne ont déjà été proposés par le passé.

Il est notamment connu d'utiliser des catalyseurs d'oxydation à support particulaire ou à support monolithe, en particulier pour oxyder le CO et les hydrocarbures imbrûlés.

Pour les particules des moteurs Diesel, il existe également des systèmes de piégeage régénérables.

Des dispositifs de traitement de gaz mettant en oeuvre des électrofiltres à effet couronne sont également connus, en particulier des documents EP-A- 0299 197 (US-A-4 871 515) et US-A-4 478 613.

Les dispositifs de ces deux documents fonctionnent selon des principes différents. En effet, dans le cas du dispositif objet du premier de ces deux documents, les particules sont destinées à être piégées dans une structure collectrice, tandis qu'avec le dispositif décrit dans le second de ces deux documents, les particules forment des agglomérats sur la structure collectrice qui se détachent ensuite de cette surface collectrice et sont entraînés par le flux de gaz circulant dans le dispositif, avant d'être séparés de celui-ci au moyen d'un séparateur mécanique. Le préambule de la revendication 1 est connu de EP-A-0 367 587, EP-A-0 256 325 et US-A-5 787 704.

L'invention vise à améliorer les dispositifs de traitement connus, notamment en ce qui concerne leur efficacité.

Elle vise également à réaliser un dispositif de traitement qui soit compact, peu onéreux et facile à fabriquer.

Elle propose, à cet effet, un dispositif de traitement d'un milieu gazeux chargé de particules, ayant au moins un électrofiltre à effet couronne comportant :
- une enveloppe longitudinale ;
- un passage longitudinal pour les gaz, s'étendant dans l'enveloppe et dont les deux extrémités opposées sont adjacentes à l'entrée et à la sortie des gaz de l'électrofiltre, respectivement ;
- une structure émissive s'étendant longitudinalement et sensiblement au centre du passage ; et
- une structure collectrice s'étendant longitudinalement entre le passage et l'enveloppe et comportant une pluralité de cavités formant des logements de piégeage des particules contenues dans le milieu gazeux ;
caractérisé en ce que
la structure émissive comporte une pluralité de plaques dentelées disposées transversalement à la direction longitudinale du passage et formant des pointes dirigées vers la structure collectrice.

Grâce à un tel dispositif de traitement, on apporte une réponse aux besoins qui viennent d'être mentionnés. Ce dispositif s'avère notamment particulièrement efficace en termes de collecte des particules, comme on le verra plus en détail ci-après.

Pour des raisons d'efficacité de collecte et de commodité de réalisation, les plaques dentelées sont constituées par des étoiles destinées à être reliées à un circuit fournissant une haute tension stabilisée (plusieurs kV).

Une rondelle avec un évidement central en forme d'étoile pourrait, par exemple, également convenir.

D'autres formes géométriques pleines ou perforées ayant de préférence une pluralité de sommets dirigés vers la structure collectrice peuvent être disposées entre ces étoiles. Ces formes géométriques peuvent, par exemple, être constituées par des rondelles ou couronnes perforées de trous de différents diamètres.

Un mode de réalisation possible du circuit fournissant une haute tension stabilisée consiste à prévoir un convertisseur ou transformateur fournissant une tension comprise entre 0 et 15 kV avec réglage par un variateur.

De préférence, la tension appliquée est négative et supérieure à environ 6 kV.

Egalement pour des raisons d'efficacité, la structure collectrice comporte de préférence un séparateur ou matelas éliminateur réalisé à partir d'un tricot en fil métallique.

Selon le mode de réalisation préféré, le tricot métallique a une structure chevronnée facilitant la pénétration des particules dans le tricot.

En variante, on pourra également mettre en oeuvre, par exemple, une structure collectrice pourvue de rainures, cannelures, gorges ...

Selon le mode de réalisation préféré, le séparateur est de forme cylindrique et entoure les plaques dentelées de la structure émissive, alignées sur l'axe de la forme cylindrique de la structure collectrice.

Avantageusement, dans ce cas, la structure émissive et la structure collectrice sont montées sur une structure de support avec laquelle elles forment une cartouche filtrante amovible du dispositif de traitement.

Dans le cas d'un dispositif de traitement dont les entrée et sortie de gaz s'étendent transversalement au passage longitudinal pour ces gaz, les plaques dentelées sont, de préférence, portées par une tige reliée au circuit fournissant une haute tension et qui est portée, à chacune de ses extrémités, par un isolateur protégé par une cloche.

Pour augmenter l'efficacité de collecte, le dispositif de traitement peut, avantageusement, comporter un second électrofiltre, original en soi, et ayant des étoiles métalliques portées par une face d'un disque métallique perforé relié au circuit fournissant une haute tension stabilisée et monté en amont d'un séparateur de forme cylindrique, réalisé à partir d'un tricot en fil métallique.

Pour traiter les composants polluants gazeux, le dispositif de traitement comporte, de préférence, également un catalyseur d'oxydation à support monolithe en amont du ou des électrofiltres.

Ce dispositif de traitement peut également comporter un filtre mécanique en amont du ou des électrofiltres et, le cas échéant, du catalyseur d'oxydation, par exemple pour retenir des émulsions huileuses par utilisation d'un filtre de dévésiculation, par exemple du type à chocs en V inversé.

Selon une configuration originale en soi, le filtre mécanique comprend un filtre à mailles métalliques, c'est-à-dire réalisé à partir d'un tricot en fil métallique ou tricot métallique, définissant un passage forcé pour le milieu gazeux pénétrant dans le dispositif de traitement et associé à une résistance électrique adaptée à élever la température du milieu gazeux.

Une telle structure filtrante permet d'amener le milieu gazeux à la température de fonctionnement du catalyseur d'oxydation. Mais surtout, elle permet de réaliser un dispositif de traitement particulièrement compact en provoquant la combustion de particules retenues dans le filtre. Il en résulte une quantité moindre de particules à traiter par le ou les électrofiltres et, partant, une réduction possible de la taille du dispositif de traitement.

Ce dispositif de traitement peut également être pourvu d'une entrée d'air d'oxydation et/ou d'une entrée d'air de nettoyage.

Pour lutter contre les phénomènes de contre-pression néfastes au bon fonctionnement d'un moteur à combustion interne et associées à un tel dispositif, ce dernier peut également être pourvu de moyens d'aspiration en aval du ou des électrofiltres.

Dans le mode de réalisation préféré, le dispositif de traitement comporte, par ailleurs, au moins une enveloppe cylindrique de logement du ou des électrofiltres et, le cas échéant, du catalyseur d'oxydation et/ou du filtre mécanique.

La présente invention a, enfin, trait à un véhicule équipé d'un dispositif de traitement tel que défini ci-dessus.

D'autres objets, caractéristiques et avantages de la présente invention ressortent de la description qui suit, faite en référence aux dessins annexés sur lesquels :
- la figure 1 est un schéma de principe d'un dispositif de traitement de gaz d'échappement conforme à un mode de réalisation préféré de la présente invention,
- la figure 2 est un schéma de principe d'un dispositif de traitement de gaz d'échappement à plusieurs étages, conforme à un autre mode de réalisation de la présente invention ; et
- la figure 3 est un schéma illustrant un véhicule automobile équipé du dispositif de la figure 2.

Avant de passer à la description de ces figures, on rappellera brièvement le principe de fonctionnement d'un électrofiltre a effet couronne.

Un tel électrofiltre est basé sur la combinaison de l'aspect charge de particules par création d'ions et de la collecte des particules sous l'effet d'un champ électrique local. L'énergie permettant ce phénomène d'excitation et d'ionisation peut être apportée par un rayonnement électromagnétique ou par un transfert d'énergie cinétique par chocs.

L'effet couronne correspond à l'ionisation du gaz lorsque le champ électrique atteint un gradient de disrupture.

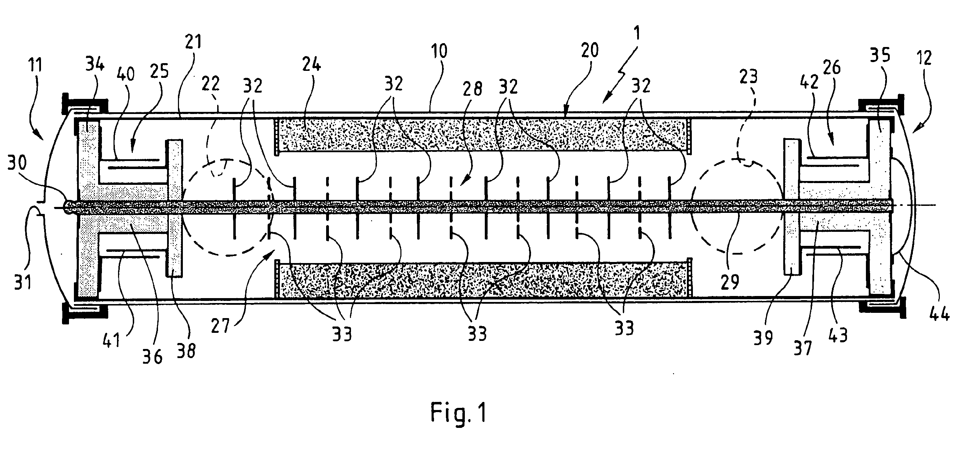

Le dispositif 1 de traitement des gaz d'échappement d'un moteur à combustion interne de la figure 1 comporte au moins une enveloppe cylindrique longitudinale 10 fermée à ses extrémités par deux couvercles 11 et 12 et dans laquelle est logée une cartouche 20 pourvue d'un électrofiltre à effet couronne.

Cette cartouche 20 comporte une cage cylindrique 21 en tôle perforée formant l'enveloppe de cette cartouche. Deux ouvertures 22 et 23, diamétralement opposées, sont pratiquées dans cette cage 21 pour permettre l'entrée et la sortie des gaz dans la cartouche 20. Ces ouvertures 22 et 23 communiquent avec des passages correspondant d'entrée et de sortie des gaz de l'enveloppe 10. Chacune de ces ouvertures 22 et 23 est, par ailleurs, disposée dans la direction longitudinale de la cartouche 20, entre une structure collectrice 24 et un isolateur 25, 26 portant la structure émissive 27 de l'électrofiltre à effet couronne.

La structure collectrice 24 est réalisée à partir d'un tricot en fil métallique d'une seule pièce entourant la structure émissive 27 entre les deux ouvertures 22 et 23. Elle délimite ainsi un passage cylindrique longitudinal 28 pour les gaz, dont les deux extrémités opposées sont adjacentes aux deux ouvertures 22 et 23. Le tricot métallique de cette structure collectrice 24 comporte, par ailleurs, une pluralité de cavités formant des logements aptes à piéger les particules contenues dans le milieux gazeux traversant ce passage 28, comme on le verra plus en détails ci-après.

En outre, ce tricot permet, par sa structure chevronnée, de faciliter la pénétration des particules dans l'épaisseur du tricot.

La structure émissive 27 comporte une tige centrale 29 s'étendant axialement et portée par les isolateurs 25 et 26 qu'elle traverse. Elle comporte, à l'une de ses extrémités, une borne 30 de connexion à un circuit fournissant une haute tension stabilisée (non représenté sur la figure 1) du type comportant un convertisseur fournissant une tension négative comprise entre 0 et 15 kV, avec réglage au moyen d'un variateur. Ce convertisseur est destiné à être relié à la batterie d'un véhicule recevant le dispositif de traitement 1.

Une ouverture 31 pratiquée dans le couvercle 11 permet le passage d'un câble de raccordement de la borne 30 à ce circuit haute tension. La cage 21 et, partant, la structure collectrice 24, est, de son côté, reliée à la masse.

Dans le cas du mode de réalisation de la figure 1, les plaques dentelées formant des pièces émissives et montées sur la tige 29, sont constituées par plusieurs étoiles métalliques 32, c'est à dire un support central plein pourvu à sa périphérie de branches triangulaires dont les pointes sont dirigées vers la structure collectrice 24. Ces étoiles 32 sont disposées transversalement à la direction longitudinale du passage 28 et la première d'entre elles est située en face de l'ouverture d'entrée des gaz 22. Les branches sont ici au nombre de huit.

Par ailleurs, ces étoiles 32 alternent avec des rondelles ou couronnes métalliques 33 perforées de trous de différents diamètres. Ces rondelles ou couronnes 33 ont, ici, le même diamètre que celui des étoiles 32 et sont montées sur la tige 29 de manière à être disposées transversalement à la direction longitudinale du passage 28.

Les isolateurs 25 et 26 sont réalisés à partir de céramique vitrifiée et comportent chacun un disque d'extrémité 34, 35 obturant les ouvertures définies par la cage 21 à ses deux extrémités longitudinales. Une partie centrale tubulaire 36, 37 entoure la tige 29 et prolonge le disque correspondant 34, 35 vers l'intérieur de la cage 21. Le diamètre externe de chacune de ces parties tubulaires 36, 37 est inférieur à celui des disques 34, 35.

En outre, une cloche 38, 39 est fixée sur chacune de ces parties tubulaires 36, 37, du côté de celles-ci opposé au côté de raccordement au disque 34, 35 respectif.

Ces cloches 38, 39, de diamètre inférieur à celui des disques 34, 35 sont voisines des ouvertures 22 et 23 et ont pour fonction de protéger les isolateurs 25 et 26 du milieu gazeux chargé de particules.

Chacune des parties tubulaires 36, 37 des isolateurs 25 et 26 est, par ailleurs, également protégée par deux déflecteurs concentriques entourant ces parties tubulaires 36, 37.

Les déflecteurs fixés respectivement au disque 34 et à la cloche 38 portent les repères numériques 40 et 41 alors que les déflecteurs fixés respectivement au disque 35 et à la cloche 39 portent les repères numériques 42 et 43. Chaque paire de déflecteur concentrique forme ainsi une chicane pour le flux de gaz présent dans la cartouche 20.

Enfin, une poignée 44 fixée au disque 35 permet de retirer aisément la cartouche 20 de l'enveloppe 10.

En fonctionnement, les étoiles 32 jouent non seulement le rôle de structures émissives de l'électrofiltre à effet couronne, mais permettent également de générer des turbulences et perturbations locales ayant notamment pour effet de dévier les particules vers la structure collectrice 24 tout en leur faisant subir une accélération, mais sans toutefois provoquer un réenvol des particules déjà piégées dans cette structure collectrice 24.

Ces turbulences et perturbations sont accrues par la présence des rondelles ou couronnes perforées 33 disposées entre les étoiles 32.

L'efficacité d'un tel système a été mesuré en présence et en l'absence d'étoiles. Dans les deux cas, le dispositif de traitement était dépourvu de rondelles ou couronnes, du type de celles portant le repère numérique 33 sur la figure 1. Le dispositif de traitement soumis aux essais était composé d'une enveloppe métallique contenant deux cartouches filtrantes métalliques du type de celle portant le repère numérique 20 sur la figure 1. Les électrofiltres de ces cartouches étaient alimentés par une alimentation haute tension stabilisée de -10 kV.

Ce dispositif a été monté à l'arrière d'un véhicule de marque Peugeot® 406 HDI équipé d'un catalyseur, mais dont le silencieux a été supprimé.

Les essais ont été réalisés sur bancs à rouleaux selon le cycle d'homologation des véhicules UDC (Urban Driving Cycle c'est à dire Cycle de Conduite Urbaine) et EUDC (Extra Urban Driving Cycle c'est à dire Cycle de Conduite Extra-Muros). La mesure d'efficacité de collecte du dispositif de traitement a été effectuée par différence de pesée entre les émissions brutes (sans dispositif de traitement) et les émissions en présence des dispositifs de traitement placés en sortie d'échappement.

Ces essais ont été réalisés sur la base de la norme NF EN ISO 8178-1 à 8.

Ces essais ont révélé des résultats inattendus. En effet, la présence d'étoiles a permis de doubler l'efficacité de collecte et d'atteindre des valeurs moyennes particulièrement élevées de l'ordre de 80 %.

On appréciera également que les contre pressions générées dans ce dispositif de traitement sont minimales et n'augmentent pas au fur et à mesure du colmatage de la structure collectrice 24.

Il est d'ailleurs à noter à cet égard que le nettoyage de cette structure collectrice 24 est relativement facile à effectuer. En effet, il suffit de retirer la cartouche de l'enveloppe 10 en la faisant coulisser dans celle-ci, puis de la plonger par exemple dans un bain à ultrasons.

En variante, ce nettoyage peut être effectué par incorporation d'une résistance électrique dans la structure collectrice 24 en vue de brûler les particules et de régénérer cette structure collectrice 24 ou par injection d'air et aspiration au moyen d'un système à Venturi.

L'augmentation de l'épaisseur du tricot métallique de cette structure collectrice 24 permet par ailleurs également de diminuer le bruit produit par les gaz lors de leur passage dans le dispositif de traitement 1.

On appréciera encore qu'un tel dispositif de traitement 1 permet de produire de l'ozone, en particulier en diminuant dans une mesure acceptable l'espace entre les étoiles 32 et la structure collectrice 24. Cet ozone a pour effet avantageux d'oxyder certains composés gazeux présents dans les gaz d'échappement.

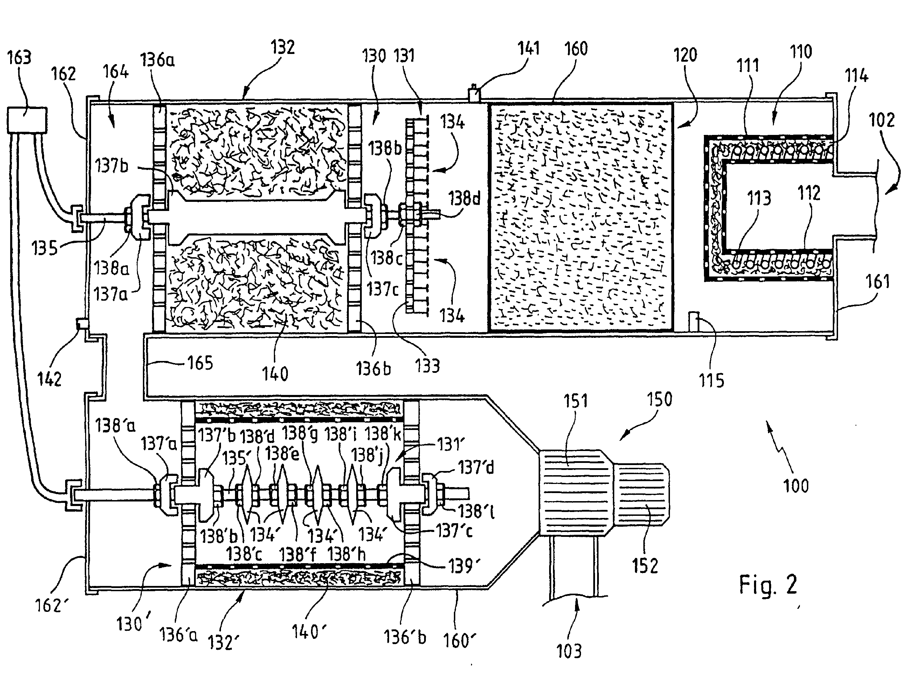

Le dispositif 100 de traitement à plusieurs étages de la figure 2 comporte d'amont en aval, c'est-à-dire entre une entrée 102 et une sortie 103, un filtre mécanique 110, un catalyseur d'oxydation 120, un premier électrofiltre 130, un second électrofiltre 130' et des moyens d'aspiration 150.

Il s'agit, comme pour le dispositif 1 de la figure 1, d'un dispositif de traitement de gaz d'échappement d'un moteur Diesel.

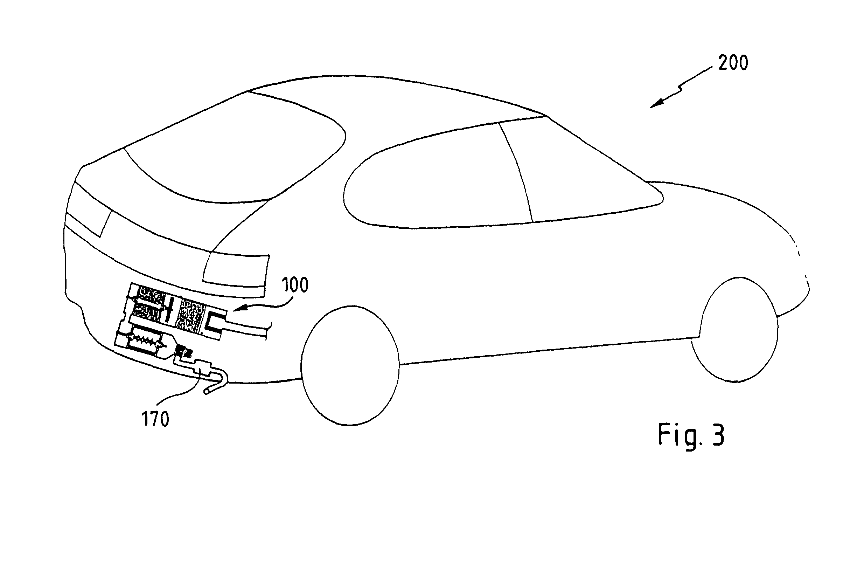

L'ensemble de ces éléments est logé dans deux enveloppes cylindriques 160, 160', calorifugées au moins à l'emplacement du filtre 110 et du catalyseur d'oxydation 120, communiquant l'une avec l'autre, et formant dans le cas du véhicule automobile de la figure 3, une partie de la ligne d'échappement située entre le collecteur d'échappement et le silencieux de ce véhicule.

Le filtre mécanique 110 est, ici, fixé à une coiffe amovible 161, obturant l'extrémité amont de l'enveloppe cylindrique longitudinale 160 et pourvue de l'entrée 102.

Ce filtre mécanique 110 comporte deux cylindres concentriques en tôle perforée 111, 112 ayant la forme d'une crépine. Entre ces deux cylindres 111, 112 sont placés une résistance électrique chauffante 113 et un tricot métallique multicouche 114.

Comme on peut le voir sur la figure 2, ce filtre mécanique 110 définit un passage forcé pour les gaz d'échappement pénétrant dans le dispositif de traitement 100 par l'entrée 102.

La résistance électrique 113 est une résistance connue en soi, du type à régulation de température. A cet égard, il est prévu une sonde 115 de détection de température dans la zone du filtre 110. Cette résistance 113 est par ailleurs, ici, en forme d'hélice et entoure le cylindre perforé intérieur 112.

Elle est, en outre, destinée à être alimentée par la batterie du véhicule pour élever la température des gaz d'échappement traversant le filtre mécanique 110.

Un tel filtre mécanique 110 permet, le cas échéant, d'amener les gaz d'échappement à la température de fonctionnement du catalyseur d'oxydation 120, mais également de piéger une partie au moins des particules contenues dans les gaz d'échappement et d'en provoquer la combustion.

A cet égard, afin d'abaisser la température de début d'oxydation des particules carbonées, le tricot métallique 114 est, ici, enduit d'oxyde de cuivre.

En pratique, la résistance électrique 113 sera donc choisie pour amener les gaz d'échappement à une température d'au moins 200-300°C, le maximum étant compris entre 700 et 800°C.

Les gaz d'échappement sortant du filtre mécanique 110 à régénération en continu traversent ensuite le catalyseur d'oxydation 120. Ce dernier comporte un support monolithe réalisé en céramique ou en métal et destiné principalement à assurer l'oxydation du monoxyde de carbone (CO), du monoxyde d'azote (NO) et des hydrocarbures (HC).

A cet égard, si l'on souhaite favoriser l'oxydation du CO et des hydrocarbures, au détriment du NO, on pourra installer une soupape d'entrée d'air en amont du catalyseur d'oxydation 120. Cet air servira également, dans ce cas, à favoriser la combustion au niveau du filtre 110.

Les gaz d'échappement sortant du catalyseur d'oxydation 120 vont alors être traités par le premier électrofiltre 130 à effet couronne, destiné à piéger au moins une partie des particules contenues dans les gaz d'échappement et n'ayant pas été retenues par le filtre mécanique 110.

Cet électrofiltre 130 comporte une structure émissive 131 en amont d'une structure collectrice 132. Plus précisément, la structure émissive comporte un disque perforé 133 ayant des étoiles métalliques 134 faisant saillie de la face du disque 133 en regard du catalyseur d'oxydation 120.

Ce disque perforé 133 est porté par une tige filetée 135 s'étendant axialement et portée par deux disques 136a, 136b en tôle perforée enserrant la structure collectrice 132. Ces disques 136a, 136b ont un diamètre supérieur à celui du disque 133 et sont ajustés à frottement doux à l'intérieur de l'enveloppe 160.

L'extrémité aval de la tige filetée 135 traverse une coiffe amovible 162 obturant l'extrémité aval de l'enveloppe 160. Cette extrémité est destinée à être reliée à un boîtier transformateur 163, destiné à être relié à la batterie du véhicule et à permettre d'appliquer à l'électrofiltre 130 une haute tension stabilisée (en pratique environ 110 kV).

A cet égard, afin d'isoler la structure émissive 131 de la structure collectrice 132, la tige filetée 135 traverse les disques perforés 136a, 136b par l'intermédiaire d'isolateurs 137a-137c en céramique.

Des écrous 138a-138d sont disposés de part et d'autre des isolateurs 137a-137c et du disque perforé 133 pour solidariser les disques 133, 136a et 136b et la tige filetée 135. On observera, d'ailleurs, dans le cas du présent mode de réalisation, que ces disques 133, 136a et 136b s'étendent perpendiculairement à la tige filetée 135.

La structure collectrice 132, reliée ici à la masse, comporte un tricot métallique 140, entourant l'isolateur 137b et la tige 135, formant une pluralité de cavités et s'étendant entre l'isolateur 137b et l'enveloppe 160. Comme pour le tricot métallique 114, ce dernier tricot 140 est, ici, multicouche.

Comme on peut encore le voir sur la figure 2, les axes porteurs des étoiles 134 s'étendent axialement. Par ailleurs, ces étoiles 134 sont, ici, à huit branches triangulaires.

En outre, il est également prévu dans la zone du premier électrofiltre 130 un système de nettoyage par air, permettant de le décolmater périodiquement avant d'en effectuer la dépose pour un nettoyage plus poussé. Ce système comporte, d'une part, une soupape anti-retour 141 d'injection d'air à l'une des extrémités de la zone de réception du premier électrofiltre 130 et un raccord 142 monté sur la coiffe 162, sur lequel on vient brancher des moyens d'aspiration lorsque l'on souhaite nettoyer l'électrofiltre 130.

Grâce à l'électrofiltre 130, les particules qui ont réussi à traverser le filtre mécanique 110 sont chargées puis attirées par la structure collectrice 132, où elles sont piégées dans le volume poreux formé par le tricot métallique 140.

Grâce à la mise en oeuvre d'étoiles 134, la structure 131 formant électrode émissive permet de charger efficacement les particules, tandis que la structure collectrice 132 permet de retenir efficacement une partie au moins des particules traversant l'électrofiltre 130, au sein des cavités du tricot 140.

Par ailleurs, le disque perforé 133 assure une répartition optimale des gaz d'échappement avant la traversée de la structure collectrice 132.

Les gaz d'échappement sortant de l'électrofiltre arrivent alors dans un caisson de détente 164 formé par la zone située entre l'extrémité aval de l'électrofiltre 130 et la coiffe 162. Ce caisson 164 communique par un raccord cylindrique 165 avec l'intérieur de l'enveloppe cylindrique 160', afin d'amener les gaz d'échappement au second électrofiltre 130'.

Ce dernier est similaire à celui de la figure 1, en ce que la structure émissive 131' est formée par des étoiles métalliques 134' montées sur une tige filetée 135'.

Ces étoiles métalliques, ici également à huit branches, sont ainsi alignées sur l'axe de l'enveloppe 160'. Elles sont par ailleurs décalées angulairement l'une par rapport à l'autre.

Pour le reste, on retrouve des disques métalliques perforés 136'a, 136'b, des isolateurs 137'a-137'd et des écrous 138'a-138'I.

Par ailleurs, la structure collectrice 132' est formée par un cylindre en tôle perforée 139' s'étendant axialement, entourant les étoiles 134' et entouré par un tricot métallique 140', formant une pluralité de cavités.

La structure émissive 131' est, ici, également alimentée par une haute tension stabilisée (5 kV) au moyen du boîtier transformateur 163.

Grâce à ce second électrofiltre 130' à effet couronne, il est possible de traiter une fois de plus les gaz d'échappement afin de retenir une quantité supplémentaire de particules, en particulier celles qui auraient pu s'échapper de l'électrofiltre à effet couronne 130 par réenvol.

On notera également que ces électrofiltres 130, 130' constituent des cartouches qu'il est facile d'installer ou de retirer des enveloppes 160 et 160', respectivement, après avoir ôté les coiffes 162 et 162', respectivement.

Pour lutter contre les phénomènes de contre-pressions néfastes au bon fonctionnement du moteur, le dispositif de traitement 100 comporte, de préférence, des moyens d'aspiration 150 en aval du second électrofiltre 130' et avant la sortie 103. Ceux-ci aspirent les gaz d'échappement circulant dans les enveloppes 160 et 160', et comprennent, à cet effet, une turbine d'aspiration 151 alimentée par un moteur 152.

Comme illustré sur la figure 3, le dispositif de traitement des gaz d'échappement 100 est installé sur la ligne d'échappement d'un véhicule automobile 200 à moteur Diesel, grâce à des moyens de montage connus en soi et entre le collecteur d'échappement et le silencieux 170 de ce véhicule.

La gestion du fonctionnement de la résistance électrique 113, du boîtier transformateur 163 et des moyens d'aspiration 150 peut être assurée par les systèmes de gestion du moteur déjà existants sur le véhicule 200, moyennant une adaptation de ceux-ci, ou bien par un système de gestion additionnel autonome ou accouplé aux systèmes existants.

Grâce à un tel dispositif de traitement 100, les gaz d'échappement du véhicule 200 sont traités de manière particulièrement efficace, tant du point de vue des composants polluants gazeux que des composants polluants particulaires. Par ailleurs, ce dispositif est facile à installer sur le véhicule 200 et facile à entretenir. En outre, son prix de revient est relativement modéré par rapport aux avantages procurés.

On notera plus généralement que le dispositif de traitement de la présente invention peut être utilisé pour traiter tous types de gaz d'échappement d'un moteur à combustion interne (Diesel, essence, gaz) d'un véhicule quelconque (automobile, bateau, ...). Il peut même être installé sur un chariot pour le traitement des gaz d'échappement d'un véhicule en réparation dans un garage, voire dans des galeries souterraines dont le milieu gazeux est chargé de composants polluants.

Bien entendu, la présente demande ne se limite nullement au mode de réalisation choisi et représenté, mais englobe toute variante à la portée de l'homme du métier dans le cadre défini par les revendications.

En particulier, le catalyseur d'oxydation à support monolithe peut être remplacé par un catalyseur d'oxydation à support particulaire ou tout autre catalyseur d'oxydation, tel qu'un pot catalytique à trois voies, ou simplement être constitué par un catalyseur d'oxydation existant déjà sur le véhicule.

Par ailleurs, il est possible de mettre en oeuvre plusieurs électrofiltres du type de celui de la figure 1, l'un à la suite de l'autre, et si nécessaire dans plusieurs enveloppes cylindriques, si la cylindrée du moteur à combustion interne le requiert. Il est également possible d'utiliser le premier électrofiltre 130 sans le second électrofiltre 130' et vice versa.

Les cylindres en tôle perforée utilisés dans le cadre du mode de réalisation de la figure 1 peuvent également être remplacés par des cylindres réalisés à partir d'un treillis métallique ou de métal déployé.

D'autres filtres mécaniques, tels que des filtres de dévésiculation à chocs en V inversé ou des filtres de finition peuvent venir compléter le dispositif de traitement 100 de la figure 2 ou remplacer le filtre 110 ou l'un des deux électrofiltres 130, 130'. L'utilisation de tels filtres mécaniques peut s'avérer intéressante pour optimiser la répartition des gaz ou pour réduire les bruits générés par le dispositif, en sortie de ce dernier.

La résistance électrique 113 peut être remplacée par une résistance ayant une configuration différente. On peut également envisager de faire fonctionner celle-ci de façon discontinue.

Un système de nettoyage par air peut également être prévu pour un nettoyage du second électrofiltre 130'.

## Revendications

1. Dispositif de traitement d'un milieu gazeux chargé de particules, ayant au moins un électrofiltre (20 ; 130') à effet couronne comportant :
- une enveloppe longitudinale ;
- un passage longitudinal (28) pour les gaz, s'étendant dans l'enveloppe et dont les deux extrémités opposées sont adjacentes à l'entrée (22) et à la sortie (23) des gaz de l'électrofiltre, respectivement ;
- une structure émissive (32, 134') s'étendant longitudinalement et sensiblement au centre du passage ; et
- une structure collectrice (24 ; 140') s'étendant longitudinalement entre le passage et l'enveloppe et comportant une pluralité de cavités formant des logements de piégeage des particules contenues dans le milieu gazeux ;
**caractérisé en ce que**
la structure émissive comporte une pluralité de plaques dentelées (32 ; 134') disposées transversalement à la direction longitudinale du passage et formant des pointes dirigées vers la structure collectrice (24 ; 140').

2. Dispositif de traitement selon la revendication 1, **caractérisé en ce que** les plaques dentelées sont constituées par des étoiles destinées à être reliées à un circuit fournissant une haute tension stabilisée.

3. Dispositif de traitement selon la revendication 1 ou 2, **caractérisé en ce que** la structure collectrice comporte un séparateur réalisé à partir d'un tricot en fil métallique.

4. Dispositif de traitement selon la revendication 3, **caractérisé en ce que** le séparateur est de forme cylindrique et entoure les plaques dentelées de la structure émissive, alignées sur l'axe de la forme cylindrique de la structure collectrice.

5. Dispositif de traitement selon l'une quelconque des revendications 1 à 4, **caractérisé en ce que** la structure émissive et la structure collectrice sont montées sur une structure de support avec laquelle elles forment une cartouche filtrante amovible du dispositif de traitement.

6. Dispositif de traitement selon l'une quelconque des revendications 1 à 5, **caractérisé en ce que** les plaques dentelées alternent avec des rondelles ou couronnes (33) perforées et disposées transversalement à la direction longitudinale du passage.

7. Dispositif de traitement selon l'une quelconque des revendications 1 à 6, **caractérisé en ce qu'**il comporte une entrée et une sortie de gaz s'étendant transversalement au passage longitudinal pour ces gaz, et les plaques dentelées sont portées par une tige reliée à un circuit fournissant une haute tension stabilisée et qui est portée, à chacune de ses extrémités, par un isolateur protégé par une cloche.

8. Dispositif de traitement selon l'une quelconque des revendications 1 à 7, **caractérisé en ce qu'**il comporte un second électrofiltre ayant des étoiles métalliques portées par une face d'un disque métallique perforé (133) relié au circuit fournissant une haute tension stabilisée et monté en amont d'un séparateur (132) de forme cylindrique, réalisé à partir d'un tricot en fil métallique.

9. Dispositif de traitement selon l'une quelconque des revendications 1 à 8; **caractérisé en ce qu'**il comporte un catalyseur d'oxydation (120) à support monolithe en amont du ou des électrofiltres.

10. Dispositif de traitement selon l'une quelconque des revendications 1 à 9, **caractérisé en ce qu'**il comporte un filtre mécanique (110) en amont du ou des électrofiltres et, le cas échéant, du catalyseur d'oxydation (120).

11. Dispositif de traitement selon la revendication 10, **caractérisé en ce que** le filtre mécanique (110) comprend un filtre à mailles métalliques (114), définissant un passage forcé pour le milieu gazeux pénétrant dans le dispositif de traitement et associé à une résistance électrique (113) adaptée à élever la température du milieu gazeux.

12. Dispositif de traitement selon l'une quelconque des revendications 1 à 11, **caractérisé en ce qu'**il comporte une entrée d'air d'oxydation et/ou une entrée (141) d'air de nettoyage.

13. Dispositif de traitement selon l'une quelconque des revendications 1 à 12, **caractérisé en ce qu'**il comporte des moyens d'aspiration (150) en aval du ou des électrofiltres (130, 130').

14. Dispositif de traitement selon l'une quelconque des revendications 1 à 13, **caractérisé en ce qu'**il comporte au moins une enveloppe cylindrique de logement du ou des électrofiltres et, le cas échéant, du catalyseur d'oxydation (120) et/ou du filtre mécanique (110).

15. Dispositif de traitement selon la revendication 8 ou l'une des revendications 9 à: 14, prise en combinaison avec la revendication 8, **caractérisé en ce qu'**il comporte, en outre, un filtre de finition.

16. Utilisation d'un dispositif de traitement tel que défini par l'une quelconque des revendications 1 à 15 pour le traitement des gaz d'échappement d'un moteur à combustion interne.

17. Véhicule équipé d'un dispositif de traitement tel que défini par l'une quelconque des revendications 1 à 15.

## Claims

1. A device for treating a particle-laden gaseous medium, having at least one corona-effect electrostatic filter (20; 130') comprising:
- a longitudinal casing;
- a longitudinal channel (28) for the gases, extending in the casing and with its two opposite ends adjacent to the gas inlet (22) and outlet (23) of the electrostatic filter, respectively;
- an emitting structure (32, 134') extending longitudinally and roughly at the centre of the channel; and
- a collecting structure (24; 140') extending longitudinally between the channel and the casing and comprising a plurality of cavities forming sites for trapping the particles contained in the gaseous medium;
**characterized in that**
the emitting structure comprises a plurality of serrated plates (32; 134') arranged transversely to the longitudinal direction of the channel and forming points directed towards the collecting structure (24; 140').

2. A treatment device according to claim 1, **characterized in that** the serrated plates are constituted of stars that are to be connected to a circuit supplying a stabilized high voltage.

3. A treatment device according to claim 1 or 2, **characterized in that** the collecting structure comprises a separator made from metal wire fabric.

4. A treatment device according to claim 3, **characterized in that** the separator is of cylindrical shape and surrounds the serrated plates of the emitting structure, aligned on the axis of the cylindrical shape of the collecting structure.

5. A treatment device according to any one of the claims 1 to 4, **characterized in that** the emitting structure and the collecting structure are mounted on a supporting structure with which they form a removable filter cartridge of the treatment device.

6. A treatment device according to any one of the claims 1 to 5, **characterized in that** the serrated plates alternate with perforated washers or rings (33) that are arranged transversely to the longitudinal direction of the channel.

7. A treatment device according to any one of the claims 1 to 6, **characterized in that** it has a gas inlet and outlet extending transversely to the longitudinal channel for these gases, and the serrated plates are carried by a rod connected to a circuit that supplies a stabilized high voltage and which is carried, at each of its ends, by an insulator protected by a bell.

8. A treatment device according to any one of the claims 1 to 7, **characterized in that** it has a second electrostatic filter having metal stars carried by one face of a perforated metal disk (133) connected to the circuit supplying a stabilized high voltage and mounted upstream of a separator (132) of cylindrical shape, made from a metal wire fabric.

9. A treatment device according to any one of the claims 1 to 8, **characterized in that** it has an oxidation catalyst (120) with monolithic support, upstream of the electrostatic filter or filters.

10. A treatment device according to any one of the claims 1 to 9, **characterized in that** it has a mechanical filter (110) upstream of the electrostatic filter or filters and, if appropriate, of the oxidation catalyst (120).

11. A treatment device according to claim 10, **characterized in that** the mechanical filter (110) comprises a metal mesh filter (114), defining a forced channel for the gaseous medium entering the treatment device and associated with an electrical resistance (113) that is able to raise the temperature of the gaseous medium.

12. A treatment device according to any one of the claims 1 to 11, **characterized in that** it has an inlet for oxidation air and/or an inlet for cleaning air (141).

13. A treatment device according to any one of the claims 1 to 12, **characterized in that** it has aspirating means (150) downstream of the electrostatic filter or filters (130, 130').

14. A treatment device according to any one of the claims 1 to 13, **characterized in that** it has at least one cylindrical casing for housing the electrostatic filter or filters and, if appropriate, the oxidation catalyst (120) and/or the mechanical filter (110).

15. A treatment device according to claim 8 or one of claims 9 to 14 taken in combination with claim 8, **characterized in that** it comprises in addition, a finishing filter.

16. Use of a treatment device as defined by any one of the claims 1 to 15 for treating exhaust gases from an internal combustion engine.

17. A vehicle equipped with a treatment device as defined by any one of the claims 1 to 15.

## Patentansprüche

1. Vorrichtung zur Behandlung eines gasförmigen Mediums, das mit Partikeln angereichert ist, die mindestens einen Elektrofilter (20; 130') mit Kranzeffekt besitzt, umfassend:
- eine Längshülle;
- einen Längsdurchgang (28) für die Gase, der sich in der Hülle erstreckt und dessen beide gegenüber liegenden Enden an den Eingang (22) bzw. den Ausgang (23) der Gase des Elektrofilters angrenzen;
- eine Emissionsstruktur (32, 134'), die sich längs und im Wesentlichen in der Mitte des Durchgangs erstreckt; und
- eine Sammelstruktur (24; 140'), die sich längs zwischen dem Durchgang und der Hülle erstreckt und eine Vielzahl von Hohlräumen umfasst, die Lagerungen zur Aufnahme der in dem gasförmigen Medium enthaltenen Partikel bilden;
**dadurch gekennzeichnet, dass**
die Emissionsstruktur eine Vielzahl von gezahnten Platten (32; 134') umfasst, die quer zur Längsrichtung des Durchgangs angeordnet sind und Spitzen bilden, die zur Sammelstruktur (24; 140') gerichtet sind.

2. Behandlungsvorrichtung nach Anspruch 1, **dadurch gekennzeichnet, dass** die gezahnten Platten von Sternen gebildet sind, die dazu bestimmt sind, mit einer Schaltung verbunden zu werden, die eine stabilisierte Hochspannung liefert.

3. Behandlungsvorrichtung nach Anspruch 1 oder 2, **dadurch gekennzeichnet, dass** die Sammelstruktur einen Separator umfasst, der aus einem Metallgewebe hergestellt ist.

4. Behandlungsvorrichtung nach Anspruch 3, **dadurch gekennzeichnet, dass** der Separator zylindrische Form hat und die gezahnten Platten der Emissionsstruktur umgibt, die auf der Achse der zylindrischen Form der Sammelstruktur ausgerichtet sind.

5. Behandlungsvorrichtung nach einem der Ansprüche 1 bis 4, **dadurch gekennzeichnet, dass** die Emissionsstruktur und die Sammelstruktur auf einer Stützstruktur montiert sind, mit der sie eine Filterpatrone bilden, die von der Behandlungsvorrichtung abnehmbar ist.

6. Behandlungsvorrichtung nach einem der Ansprüche 1 bis 5, **dadurch gekennzeichnet, dass** sich die gezahnten Platten mit Scheiben oder Kränzen (33) abwechseln, die perforiert und quer zur Längsrichtung des Durchgangs angeordnet sind.

7. Behandlungsvorrichtung nach einem der Ansprüche 1 bis 6, **dadurch gekennzeichnet, dass** sie einen Eingang und einen Ausgang für Gase umfasst, die sich quer zum Längsdurchgang für diese Gase erstrecken, und dass die gezahnten Platten von einer Stange getragen werden, die mit einer Schaltung verbunden ist, die eine stabilisierte Hochspannung liefert, und die an jedem ihrer Enden von einem durch eine Glocke geschützten Isolator getragen wird.

8. Behandlungsvorrichtung nach einem der Ansprüche 1 bis 7, **dadurch gekennzeichnet, dass** sie einen zweiten Elektrofilter umfasst, der metallische Sterne aufweist, die von einer Seite einer perforierten metallischen Scheibe (133) getragen werden, die mit der Schaltung, die eine stabilisierte Hochspannung liefert, verbunden und stromaufwärts zu einem Separator (132) mit zylindrischer Form montiert ist, der aus einem Metallgewebe hergestellt ist.

9. Behandlungsvorrichtung nach einem der Ansprüche 1 bis 8, **dadurch gekennzeichnet, dass** sie einen Oxidationskatalysator (120) mit Monolithträger stromaufwärts zu dem oder den Elektrofiltern umfasst.

10. Behandlungsvorrichtung nach einem der Ansprüche 1 bis 9, **dadurch gekennzeichnet, dass** sie einen mechanischen Filter (110) stromaufwärts zu dem oder den Elektrofiltern und gegebenenfalls zum Oxidationskatalysator (120) umfasst.

11. Behandlungsvorrichtung nach Anspruch 10,
**dadurch gekennzeichnet, dass** der mechanische Filter (110) einen Metallmaschenfilter (114) umfasst, der einen Zwangsdurchgang für das in die Behandlungsvorrichtung eindringende gasförmige Medium definiert und mit einem elektrischen Widerstand (113) verbunden ist, der dazu ausgeführt ist, die Temperatur des gasförmigen Mediums zu erhöhen.

12. Behandlungsvorrichtung nach einem der Ansprüche 1 bis 11, **dadurch gekennzeichnet, dass** sie einen Eingang für Oxidationsluft und/oder einen Eingang (141) für Reinigungsluft umfasst.

13. Behandlungsvorrichtung nach einem der Ansprüche 1 bis 12, **dadurch gekennzeichnet, dass** sie Ansaugmittel (150) stromabwärts zu dem oder den Elektrofiltern (130, 130') umfasst.

14. Behandlungsvorrichtung nach einem der Ansprüche 1 bis 13, **dadurch gekennzeichnet, dass** sie mindestens eine zylindrische Hülle zur Lagerung des oder der Elektrofilter und gegebenenfalls des Oxidationskatalysators (120) und/oder des mechanischen Filters (110) umfasst.

15. Behandlungsvorrichtung nach Anspruch 8 oder einem der Ansprüche 9 bis 14 in Kombination mit Anspruch 8, **dadurch gekennzeichnet, dass** sie ferner einen Endfilter umfasst.

16. Verwendung einer Behandlungsvorrichtung, wie durch einen der Ansprüche 1 bis 15 definiert, für die Behandlung der Abgase eines Verbrennungsmotors.

17. Fahrzeug, das mit einer Behandlungsvorrichtung, wie durch einen der Ansprüche 1 bis 15 definiert, ausgestattet ist.
